# EUROPEAN PATENT SPECIFICATION

(11) **EP 3 620 400 B1**
(45) Date of publication and mention of the grant of the patent: **30.03.2022**
(21) Application number: 18809188.8
(22) Date of filing: 15.05.2018
(51) Int. Cl.: B65D 33/01, B65D 51/16, B65D 77/22, B65D 81/20, B65D 81/24, B65D 81/26, F16K 15/14, F16K 15/16

(54) **DEGASSING VALVE WITH POSITIVE-PRESSURE CONTROL, METHODS FOR PRODUCING SAME AND PACKETS CONTAINING SAME**
ENTGASUNGSVENTIL MIT ÜBERDRUCKREGELUNG, VERFAHREN ZU DESSEN HERSTELLUNG UND DIESE ENTHALTENDE PAKETE
SOUPAPE POUR LE DÉGAZAGE À RÉGULATION DE PRESSION POSITIVE, PROCÉDÉS DE FABRICATION DE CELLES-CI ET EMBALLAGES LES COMPRENANT

(30) Priority: 02.06.2017 CO 17005549
(43) Date of publication of application: 11.03.2020
(73) Proprietor: Prisma Coffee Tech S.A.S., 109 Itagui (CO)
(72) Inventor: ESTRADA VELEZ, Juan Manuel, Medellin (CO)
(74) Representative: Sach, Greg Robert
(86) International application number: PCT/IB2018/053391
(87) International publication number: WO 2018/220460

(56) References cited:
- EP-A1- 2 088 087
- WO-A1-2014/183197
- WO-A1-2015/069856
- WO-A2-2007/038299
- ES-T3- 2 222 953
- ES-T3- 2 601 224
- GB-A- 2 303 116
- JP-A- H09 112 721
- JP-A- 2006 207 743
- US-A- 4 890 637
- US-A- 5 209 264
- US-A1- 2003 035 597
- US-A1- 2009 169 693
- US-A1- 2012 195 529
- US-A1- 2012 243 807

## Description

### FIELD OF THE INVENTION

The present invention is directed to the technical field of degassing valves. More particularly, the present invention relates to one-way degassing valves for use in packaging. In even more detail, the invention discloses one-way degassing valves for use in storage bags (particularly for coffee), the packages that comprise the valves and methods of manufacturing the valves.

### STATE OF THE TECHNIQUE

Although there are degassing valves already reported in the state of the art, they have several drawbacks. For example, these valves allow excessive loss of volatile aromatic substances, which are desired inside the packages to maintain better product quality for longer periods of time. Likewise, many of the existing valves allow the entry of air that generates undesired atmospheres with high oxygen content within the packages. Many of the valves reported in the prior art employ a liquid that is displaced by the pressure exerted by the gases generated inside the package, allowing degassing. However, it is common for this liquid to be lost, thus damaging the proper operation of the valves. Moreover, the existing valves are fixed to the packages once the packages have been manufactured, so it is very common that there are fixing failures that generate unwanted leaks.

For example, patent document US 2014318853 discloses a one-way valve for pressure relief that does not require the addition of a sealing lubricant. This valve comprises a base that contains an opening that extends from the bottom up through the base, on top of which a layer of material similar to an adhesive and a strip of silicone or a membrane covered by any other releasing film are arranged. The release film covers the opening of the base, upon contact with the adhesive-like material, creating an attractive surface between the release layer and the adhesive-like material. The valve is adhered to a pre-existing package comprising an opening by means of a heat seal or by a pressure sensitive adhesive. However, this form of union to the packaging (after its manufacture) is not entirely reliable, since it allows leaks to occur in the joints. Additionally, this makes the process of obtaining the packages with the valves more time consuming, requiring two independent processes: one for manufacturing the packaging and a completely different one for attaching the degassing valve to the package.

On the other hand, US2015102030 refers to a multi-layered valve, comprising a first layer with at least one opening formed therein, a second layer comprising at least a second opening and a third layer. The first and second layers are joined together in a manner to form at least one first channel, while the second and third layers are joined together in a manner to form at least a second channel. Additionally, a flowing liquid is deposited in the first channel between the first and the second opening. The valve opens selectively to allow the gas flowing through the first and second channels in response to a pressure differential, where the flow rate of gas is exponentially proportional to the pressure differential. However, if the liquid between the first and the second opening leaves the system, the valve stops working under the pressure differential. Thus, all of the gases can be lost, including those gases that are desired to preserve the quality of the final product. In addition, the valve failure allows oxygen to enter the package, which also alters the quality of the stored product. Moreover, the valve of this document is assembled and fixed to the package by means of a pressure adhesive, generating a joint that can easily fail generating unwanted leaks both in and out of the package.

Patent application US 2012281933 discloses a one-way valve mounted on a vent hole in a flexible package to allow gas venting. The valve comprises a flexible base layer, a flexible cover layer and an interposed oil layer. Each layer has a pair of opposite side edges. The cover layer is thinner than the base layer and is secured thereto along respective adjacent portions of the side edges to form an open channel. The oil layer is located in the channel between the base layer and the cover layer and over the hole to form a joint that holds the cover layer together with the base layer until the pressure inside the package causes the rupture of the joint, causing the cover layer to rise, which opens the valve. However, if the oil escapes, the operation of the valve is affected, allowing the oxygen to flow into the package as well as the escaping of the desired gases to outside of the package. Likewise, this valve is affixed to the already manufactured package having an orifice, with pressure sensitive adhesives that generates weak joints that can fail.

Similar to the previous cases, patent application WO2018030071 discloses a package comprising a pressure relief valve that has opening and closing orientations and that contains a liquid film disposed therein. As it occurs with the other valves that use a liquid film, there is a possibility that the liquid will escape and break down the system. This valve is also installed in the package using adhesives that do not ensure a completely reliable connection. Other examples of one-way valves are known from GB2303116 and JP2006207743.

Thus, there is not yet a one-way multilayer degassing valve that allows to carry out the effective regulation of the internal pressure of a package without being affected by the drawbacks associated with the use of a liquid layer. Additionally, there is a need to provide an alternative method for affixing the valves to the packages, so that the chances of leakage are reduced and that the process for manufacturing the packaging and the processes of affixing the valves to the packaging are unified.

### GENERAL DESCRIPTION OF THE INVENTION

The present invention is directed to the development of a one-way multilayer degassing valve, with positive pressure control, comprising one or more layers of a base substrate, one or more layers of a stretch film and one or more layers of a filtering material. This valve does not include liquid layers, so that the drawbacks of failure associated with the loss of content of these liquids during the operation is eliminated, likewise, the invention relates to the packages comprising these valves. The valves can be adhered by a heat seal during the process for manufacturing the package, generating more efficient closures that prevent leaks. Similarly, the present invention relates to the method of manufacturing the valves.

The valve of the present invention generates a positive pressure within the package in which it is installed, when the packed material releases gas, or when the gas is injected at the time of packaging.

The valve of the present invention can be used in packaging such as coffee packaging, roast bean packaging, packaging for other types of food that release gas.

Particularly, the valve of the present invention can be used in coffee packaging. After the process of roasting the coffee is degassed, which degasification generates a positive differential pressure within each roasted coffee beans. This pressure causes volatile aromatic compounds and oils to migrate from the inside to the outside of the coffee bean. When oils migrate to the surface, they react with oxygen, which generates undesirable flavors and odors in the product (oxidative rancidity). The valve of the present invention generates a positive pressure inside the bag, decreasing or preventing the migration of the oils and aromatics from the inside of the roasted grain to outside the grain, decreasing the difference in pressures between the inside of the grain and the atmosphere inside the bag packaging. Thus, the inventors have found that the valve of the invention particularly better preserves the coffee in its packaging, keeping this preservation along the time.

The valve of the invention, in addition to controlling the positive pressure inside a package, also generates a positive pressure atmosphere of aromas of roasted coffee. The valve allows internal pressures not to be exceeded, preventing seams or seams of the bags or packages from yielding or failing.

### BRIEF DESCRIPTION OF THE FIGURES

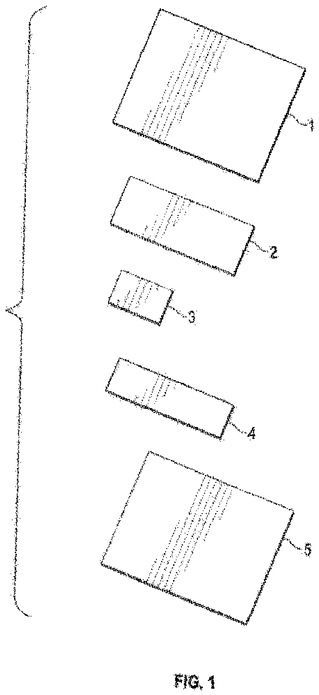

Figure 1 shows an exploded diagram of an embodiment of the valve of the present invention.
Figure 2 shows a front view of an embodiment of the valve of the present invention, attached to a packaging.

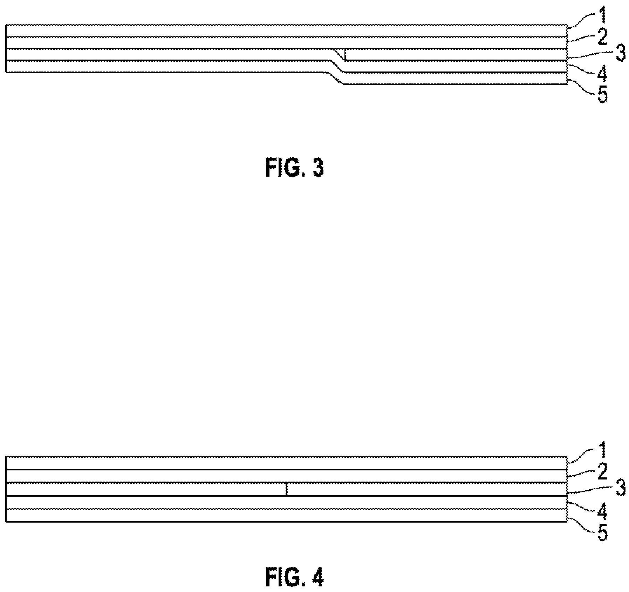

Figure 3 shows a side view of an embodiment of the valve of the present invention, wherein the duct between the layers of palletizable material is closed.
Figure 4 shows a side view of an embodiment of the valve of the present invention, wherein the duct between the layers of palletizable material is open.

### DETAILED DESCRIPTION OF THE INVENTION

First, the present invention is directed to a degassing valve to be installed in packages. Particularly, this valve provides controlled degassing of the gases released by the product contained in a package, such that it does not explode, but allowing said gases (aromas) to be contained and packed at high pressure (a pressure greater than atmospheric pressure) for longer periods of time and preventing unwanted oxygen entry.

The one-way degassing valve comprises one or more layers of a base substrate, one or more layers of a stretchable and palletizable film (plastic with high surface adherence) and one or more layers of a filtering material.

Preferably, the one-way degassing valve has a stacked structure, in which a first base substrate layer (1), a first layer of stretchable film (2), a layer of filtering material (3), a second stretchable film layer (4) and a second base substrate layer (5),are staked one above the other and in this precise order. The base substrate layers (1) (5) are wider than the stretchable film layers (2) (4) and filtering material (3). The first and second base substrate layer (1) (5) are joined together by a heat seal (7) or by adhesive means. The heat seal or adhesive means (7) are located along the outer edge of stretchable or palletizable films (2) (4). The stretchable film layers (2) (4) are bonded to the base substrate layers (1) (5) by an adhesive. The layer of filtering material (3) is attached to one or both layers of stretchable film by means of an adhesive.

Between the layers of stretchable film (2) (4) a conduit is formed that allows the passage of gases from a proximal end to a distal end of the valve. The proximal end of the valve is the one that receiving the gases coming from inside the package, while the distal end is the one that is on the outside of the package. The layer of filtering material (3) extends from the proximal end to the distal end of the valve and has a length less than the length of to first (2) and second (4) layer of stretchable film, so that there is a portion in which the first (2) and the second (4) layer of stretchable film come into direct contact, sealing the distal end. Between these two layers an attractive force is generated due to the surface properties of the film, which allows the valve to remain closed until the gas pressure inside the package is such that exceeds force generated by the base material and by the nature of the adhesion of the stretchable plastic film in the duct, and pushes the internal gases from the proximal end, opening the channel that is formed between the layers of stretchable film, towards the distal end, preventing the bag from exploding, but maintaining an internal pressure greater than the atmospheric one.

Taking into account that the pressure is by definition a force over area, the valve of the present invention can be of various sizes, depending on the desired force to prevent the escape of degassing gases, generating in turn a positive pressure within the package, but, not exceeding the pressure at which the seams or joints of the packaging would fail or yield.

The filtering material layer (3) ensures that when the channel between the layers of stretchable film (2) (4) is open, unwanted contents do not enter the packaging (6), nor does the contents come out of the packaging. The filtering material is not affected by the heat bonding process, hereafter referred to as thermal fusion.

The degassing valve is a one-way valve, so that the channel between the layers of stretchable material (2) (4) only opens to allow gas flow from inside the package to the outside, when the pressure inside the package (6) is such that a pressure differential sufficient to drive the metered flow of gases is generated. When the pressure differential decreases, the channel closes, thus allowing the package not to explode but to retain a desired amount of the gases inside at a pressure greater than the atmospheric one.

In a preferred embodiment of the invention, the base substrate comprises polyethelene, polypropylene, or other plastic used in lamination for use in food that can be heat-fused or another similar or similar material (compatible with the internal material of the package).

In another preferred embodiment of the invention, the stretchable film is a palletizable or stretchable polyethene plastic film or any other plastic film with similar surface properties.

In a preferred embodiment of the invention, the filtering material may be a porous material made of cotton, cellulose or any other material that is not affected by the thermal fusion process.

In an even more preferred embodiment of the invention, the adhesive materials joining the base substrate layers can be double-sided adhesive tape, or an industrial adhesive compatible with plastic materials.

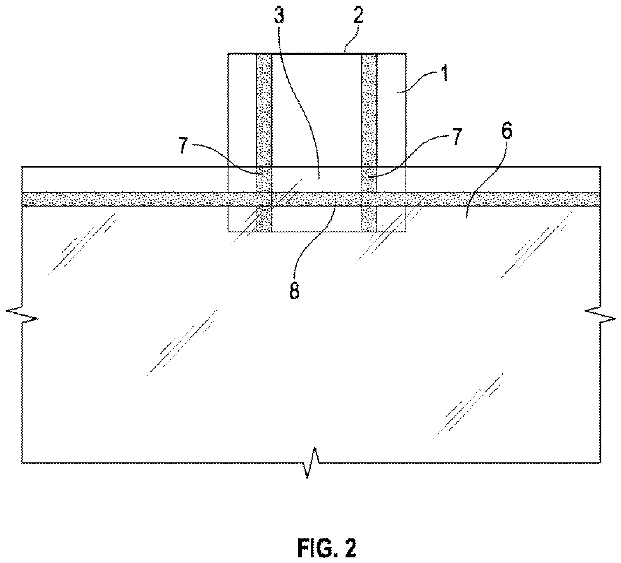

The invention provides a package comprising the degassing valve described as exemplified in Fig. 2. The package comprises one or more valves at one or more of its edges. The valves are adhered in said position by a thermal fusion process or by adhesives. This adhesion process is the same as that carried out to seal any of the edges of the package. The length of the layer of filtering material (3) is slightly longer than the width of the seal (8) by thermal fusion or adhesive in the seam of the package.

When a particular edge of a package is thermally sealed, an additional seal of the different valve layers is simultaneously provided. Due to the above, there are much lees possibilities in the final product of occurring leaks at the junctions between the valve and the package.

The fixation of the valve to the bag or packaging by thermal fusion can be carried out in the section of the valve in which the stretchable plastic layers (2) (4) are not in direct contact, because of the presence of the layer of filtering material (3) between the plastic layers, which layer has a length shorter than the length of the stretchable plastic layers (2) (4). This closure consists of a seal that joins the base substrate layers with the stretchable film layers, maintaining the presence of a duct in which the layer of filtering material is located, which is not sealed because it is not sensitive to thermal fusion. The thermal fusion closure is perpendicular to the direction of the existing duct between the layers.

In a preferred embodiment of the invention, the valve for controlled degassing is particularly used in coffee storage packages. This valve allows the gases released by the coffee after the roasting process to be released, preventing the packaging from exploding, but allowing these gases to remain inside the bag for longer periods of time, preserving the aromatic properties of the roasted coffee, thereby reducing the migration of oils from the inside of the coffee grain to outside the grain, and preventing the entry of oxygen.

It is also an object of the present invention to provide a method for manufacturing the valve, as described above. This method comprises the following stages:
i. Providing an adhesive on one of the sides of a roll of plastic palletizable film and cut the roll to the required width. The adhesive materials can be a double-sided adhesive tape, an industrial adhesive compatible with plastic materials, among others;
ii. Joining the face of the palletizable plastic film comprising adhesive to a base substrate layer, obtaining a first assembly, where the palletizable plastic film is centered with respect to the base substrate layer, generating two strips of base substrate free of palletizable plastic material, each one at each side of the palletizable plastic film;
li Repeating step ii, for obtaining a second assembly;
iv. Providing an adhesive on one of the faces of a roll of filtering material and cut said roll to a width equal to or slightly less than the width of the plastic palletizable film of the assemblies and a length shorter than the length of the plastic palletizable film, obtaining several sections of filtering material;
v. Joining the face of the sections of filtering material, comprising adhesive, to the palletizable plastic film of the first assembly, the different sections of filtering material being separated at a distance that will depend on the length of the valves;
vi. Overlapping the second assembly obtained in step iii over the first assembly obtained in step v, matching the outer free edges of the base material in both assemblies;
vii. Making a thermal fusion on the outer edges of the base material, adjacent to the edges of the palletizable plastic film, obtaining a final assembly;
viii. Cutting the final assembly perpendicularly and adjacent to one end of the sections of the filtering material.

In the method, the layers of stretchable film can be adhered to the base substrate layers and the filtering material can be adhered to one of the layers of stretchable film using double-sided adhesive tape, or an industrial adhesive compatible with plastic materials.

The base substrate has the property of being able to be fused (heat bonded) to the internal material of the packaging bags where it is desired to install the valve. If it is not compatible, an adhesive film would be installed on one of its faces.

### Examples

Example 1 - Comparative analysis of the organoleptic properties of a coffee sample packaged in a commercial packaging and a sample packaged in the packaging of the present invention.

Based on the Colombian Technical Standard (NTC) 4447 (Sensory analysis. Standard method for determining the effect of packaging on food products and beverages during storage of the products), a discriminative test was carried out on which four samples of A (a sample with commercial packaging) and four samples of B (the sample with experimental packaging) were placed in two tables, and in a interspersed pattern, for expert tasters to determine which was the most oxidized sample.

As a result, in the discriminatory test, the expert tasters identified that sample A is which contained a higher degree of oxidation and rancidity, thus demonstrating that the package and valve of the present invention provides the preservation of the organoleptic properties of coffee.

## Claims

1. A one-way degassing valve comprising a first base substrate layer (1); a first layer of stretchable film (2); a layer of filtering material (3); and a second base substrate layer (5), **characterized by** a second layer of stretchable film (4), whereby all layers stacked one on top of the other, where the base substrate layers (1, 5) are wider than the stretchable film layers (2, 4) and the filtering material layer (3) and the layer of filtering material (3) has a length shorter than the length of the stretchable film (2, 4) and base substrate (1, 5) layers, the base substrate layers being (1, 5) joined together by heat seals (7), located along the outer edges of the stretchable films (2, 4), the layers of stretchable films (2, 4) forming a conduit.

2. The valve of claim 1, wherein the base substrate comprises polyethylene, polypropylene, or a plastic for use in lamination.

3. The valve according to any of the preceding claims, wherein the stretchable film is a plastic film of palletizable or stretchable polyethylene.

4. The valve according to any of the preceding claims, wherein the filtering material is a porous material in cotton or cellulose or a material that is not thermal sensitive.

5. The valve according to any of the preceding claims, wherein the stretchable film layers are adhered to the base substrate layers and the layer of filtering material is adhered to one or both layers of stretchable film by means of an adhesive.

6. A method for manufacturing a degassing valve comprising the steps of:
i) Providing an adhesive on one of the faces of a roll of stretchable film and cutting said roll to the required width;
ii) Joining the face of the stretchable film having the adhesive to a base substrate layer, obtaining a first assembly, wherein the stretchable film is centered with respect to the base substrate layer, leaving two strips of base substrate free of stretchable film;
iii) Repeating step ii), to obtain a second assembly;
iv) Providing an adhesive on one of the faces of a roll of filtering material and cutting said roll to have the width of the stretchable film of the assemblies and to have a length shorter than the length of the stretchable film, to obtain several sections of the filtering material;
v) Joining the face having the adhesive of the sections of filtering material to the stretchable film of the first assembly, the different sections of the filtering material being separated by a distance that is equivalent to the length of the valves;
vi) Overlapping the second assembly obtained in step iii) over the first assembly obtained in step v);
vii) Applying thermal fusion at the outer edges of the base substrate, adjacent to the edges of the stretchable film;
viii) Cutting the final assembly obtained in step vii) perpendicularly and adjacent to one end of the sections of the filtering material.

7. The method according to claim 6, wherein the base substrate comprises polyethylene, polypropylene, or a plastic for use in lamination.

8. The method according to any of claims 6 or 7, wherein the stretchable film is a plastic film of palletizable or stretchable polyethylene.

9. The method according to any of claims 6 to 8, wherein the filtering material is a porous material in cotton or cellulose or a material that is not thermal sensitive.

10. The method according to any of claims 6 to 9, wherein the adhesive is a double-sided adhesive tape, or an industrial adhesive compatible with plastic materials.

11. A package comprising one or more of the valves according to any one of claims 1 to 5, wherein the valves are adhered to one or more edges of the package, by means of a thermal fusion seal (8) or an adhesive that adhere the one or more edges of the package.

## Patentansprüche

1. Ein Einweg-Entgasungsventil, das eine erste Basissubstratschicht (1); eine erste Schicht aus dehnbarer Folie (2); eine Schicht aus Filtermaterial (3); und eine zweite Basissubstratschicht (5) aufweist, **gekennzeichnet durch** eine zweite Schicht aus dehnbarer Folie (4), wobei alle Schichten übereinander gestapelt sind, wobei die Basissubstratschichten (1, 5) breiter sind als die Schichten aus dehnbarer Folie (2, 4) und die Schicht aus Filtermaterial (3), und die Schicht aus Filtermaterial (3) eine Länge aufweist, die kürzer ist als die Länge der Schichten aus dehnbarer Folie (2, 4) und der Basissubstratschichten (1, 5), wobei die Basissubstratschichten (1, 5) durch Heißversiegelungen (7) miteinander verbunden sind, die entlang der äußeren Ränder der dehnbaren Folien (2, 4) angeordnet sind, wobei die Schichten aus dehnbaren Folien (2, 4) einen Kanal bilden.

2. Das Ventil nach Anspruch 1, wobei das Basissubstrat Polyethylen, Polypropylen oder einen Kunststoff zur Verwendung bei der Laminierung aufweist.

3. Das Ventil nach einem der vorhergehenden Ansprüche, wobei die dehnbare Folie eine Kunststofffolie aus palettierbarem oder dehnbarem Polyethylen ist.

4. Das Ventil nach einem der vorhergehenden Ansprüche, wobei das Filtermaterial ein poröses Material aus Baumwolle oder Zellulose oder ein Material ist, das nicht wärmeempfindlich ist.

5. Das Ventil nach einem der vorhergehenden Ansprüche, wobei die Schichten aus dehnbarer Folie auf die Basissubstratschichten geklebt sind und die Schicht aus Filtermaterial mittels eines Klebstoffs auf eine oder beide Schichten aus dehnbarer Folie geklebt ist.

6. Ein Verfahren zur Herstellung eines Entgasungsventils, umfassend die Schritte:
i) Aufbringen eines Klebstoffs auf eine der Seiten einer Rolle dehnbarer Folie und Schneiden der Rolle auf die erforderliche Breite;
ii) Verbinden der mit dem Klebstoff versehenen Seite der dehnbaren Folie mit einer Basissubstratschicht, wodurch eine erste Baugruppe erhalten wird, bei der die dehnbare Folie in Bezug auf die Basissubstratschicht zentriert ist und zwei Streifen des Basissubstrats frei von dehnbarer Folie bleiben;
iii) Wiederholen des Schritts ii), um eine zweite Baugruppe zu erhalten;
iv) Aufbringen eines Klebstoffs auf eine der Seiten einer Rolle Filtermaterial und Schneiden der Rolle auf die Breite der dehnbaren Folie der Baugruppen und auf eine Länge, die kürzer als die Länge der dehnbaren Folie ist, um mehrere Abschnitte des Filtermaterials zu erhalten;
v) Verbinden der mit dem Klebstoff versehenen Seite der Abschnitte des Filtermaterials mit der dehnbaren Folie der ersten Baugruppe, wobei die verschiedenen Abschnitte des Filtermaterials durch einen Abstand getrennt sind, der der Länge der Ventile entspricht;
vi) Überlappen der in Schritt iii) erhaltenen zweiten Baugruppe über die in Schritt v) erhaltene erste Baugruppe;
vii) Anwenden der thermischen Verschmelzung an den äußeren Rändern des Basissubstrats, angrenzend an die Ränder der dehnbaren Folie;
viii) Schneiden der in Schritt vii) erhaltenen endgültigen Baugruppe senkrecht und angrenzend an ein Ende der Abschnitte des Filtermaterials.

7. Das Verfahren nach Anspruch 6, wobei das Basissubstrat Polyethylen, Polypropylen oder einen Kunststoff zur Verwendung bei der Laminierung aufweist.

8. Das Verfahren nach einem der Ansprüche 6 oder 7, wobei die dehnbare Folie eine Kunststofffolie aus palettierbarem oder dehnbarem Polyethylen ist.

9. Das Verfahren nach einem der Ansprüche 6 bis 8, wobei das Filtermaterial ein poröses Material aus Baumwolle oder Zellulose oder ein Material ist, das nicht wärmeempfindlich ist.

10. Das Verfahren nach einem der Ansprüche 6 bis 9, wobei der Klebstoff ein doppelseitiges Klebeband oder ein mit Kunststoffmaterialien kompatibler Industrieklebstoff ist.

11. Eine Verpackung, die ein oder mehrere der Ventile nach einem der Ansprüche 1 bis 5 aufweist, wobei die Ventile an einem oder mehreren Rändern der Verpackung mittels einer thermischen Schmelzversiegelung (8) oder eines Klebstoffs angeklebt sind, mit denen der eine oder die mehreren Ränder der Verpackung verklebt werden.

## Revendications

1. Soupape de dégazage unidirectionnelle comprenant une première couche de substrat de base (1) ; une première couche de film étirable (2) ; une couche de matériau filtrant (3) ; et une seconde couche de substrat de base (5), **caractérisée par** une seconde couche de film étirable (4), dans laquelle toutes les couches sont empilées l'une sur l'autre, dans laquelle les couches de substrat de base (1, 5) sont plus larges que les couches de film étirable (2, 4) et la couche de matériau filtrant (3), et la couche de matériau filtrant (3) présente une longueur inférieure à la longueur des couches de film étirable (2, 4) et de substrat de base (1, 5), les couches de substrat de base (1, 5) étant accouplées l'une à l'autre par des scellements thermiques (7), situés le long des bords extérieurs des films étirables (2, 4), les couches de films étirables (2, 4) formant un conduit.

2. Soupape selon la revendication 1, dans laquelle le substrat de base comprend du polyéthylène, du polypropylène, ou un plastique destiné à être utilisé dans une stratification.

3. Soupape selon l'une quelconque des revendications précédentes, dans laquelle le film étirable est un film plastique de polyéthylène palettisable ou étirable.

4. Soupape selon l'une quelconque des revendications précédentes, dans laquelle le matériau filtrant est un matériau poreux de coton ou cellulose ou un matériau qui n'est pas thermosensible.

5. Soupape selon l'une quelconque des revendications précédentes, dans laquelle les couches de film étirable sont collées aux couches de substrat de base et la couche de matériau filtrant est collée à l'une ou aux deux couches de film étirable au moyen d'un adhésif.

6. Procédé de fabrication d'une soupape de dégazage comprenant les étapes suivantes :
i) la fourniture d'un adhésif sur l'une des faces d'un rouleau de film étirable et le découpage dudit rouleau à la largeur requise ;
ii) l'accouplement de la face du film étirable comportant l'adhésif à une couche de substrat de base, l'obtention d'un premier assemblage, dans lequel le film étirable est centré par rapport à la couche de substrat de base, en laissant deux bandes de substrat de base dépourvues de film étirable ;
iii) la répétition de l'étape ii), pour obtenir un second assemblage ;
iv) la fourniture d'un adhésif sur l'une des faces d'un rouleau de matériau filtrant et le découpage dudit rouleau pour avoir la largeur du film étirable des ensembles et pour avoir une longueur inférieure à la longueur du film étirable, pour obtenir plusieurs sections du matériau filtrant ;
v) l'accouplement de la face comportant l'adhésif des sections de matériau filtrant au film étirable du premier assemblage, les différentes sections du matériau filtrant étant séparées d'une distance qui est équivalente à la longueur des soupapes ;
vi) la superposition du second assemblage obtenu à l'étape iii) sur le premier assemblage obtenu à l' étape v) ;
vii) l'application d'une fusion thermique aux bords extérieurs du substrat de base, adjacents aux bords du film étirable ;
viii) le découpage de l'assemblage final obtenu à l'étape vii) perpendiculairement et adjacent à une extrémité des sections du matériau filtrant.

7. Procédé selon la revendication 6, dans lequel le substrat de base comprend du polyéthylène, du polypropylène, ou un plastique destiné à être utilisé dans une stratification.

8. Procédé selon l'une quelconque des revendications 6 ou 7, dans lequel le film étirable est un film plastique de polyéthylène palettisable ou étirable.

9. Procédé selon l'une quelconque des revendications 6 à 8, dans lequel le matériau filtrant est un matériau poreux de coton ou cellulose ou un matériau qui n'est pas thermosensible.

10. Procédé selon l'une quelconque des revendications 6 à 9, dans lequel l'adhésif est un ruban adhésif double face, ou un adhésif industriel compatible avec des matériaux plastiques.

11. Emballage comprenant une ou plusieurs des soupapes selon l'une quelconque des revendications 1 à 5, dans lequel les soupapes sont collées à un ou plusieurs bords de l'emballage, au moyen d'un scellement à fusion thermique (8) ou d'un adhésif qui adhère aux un ou plusieurs bords de l'emballage.
